# EUROPÄISCHE PATENTSCHRIFT

(11) **EP 3 079 970 B1**
(45) Veröffentlichungstag und Bekanntmachung des Hinweises auf die Patenterteilung: **07.03.2018**
(21) Anmeldenummer: 14809340.4
(22) Anmeldetag: 02.12.2014
(51) Int. Cl.: B62D 21/11, B62D 65/12, B60G 7/02, B60G 11/24, F16F 1/373, B29C 65/48, B62D 29/00

(54) **ANORDNUNG AUS EINEM RAHMENELEMENT, EINEM VERBINDUNGSELEMENT UND EINEM AN DEM VERBINDUNGSELEMENT BEFESTIGTEN BAUTEIL**
ASSEMBLY CONSISTING OF A FRAME ELEMENT, A CONNECTING ELEMENT AND A PART SECURED TO THE CONNECTING ELEMENT
ENSEMBLE COMPOSÉ D'UN ÉLÉMENT DE CHÂSSIS, D'UN ÉLÉMENT D'ASSEMBLAGE ET D'UN ÉLÉMENT STRUCTURAL FIXÉ À L'ÉLÉMENT D'ASSEMBLAGE

(30) Priorität: 13.12.2013 DE 102013225912
(43) Veröffentlichungstag der Anmeldung: 19.10.2016
(73) Patentinhaber: Bayerische Motoren Werke Aktiengesellschaft, 80809 München (DE)
(72) Erfinder: STEBER, Gerhard, 80796 München (DE); MARMODEE, Christian, 81827 München (DE)
(86) Internationale Anmeldenummer: PCT/EP2014/076257
(87) Internationale Veröffentlichungsnummer: WO 2015/086380

(56) Entgegenhaltungen:
- EP-A1- 0 013 234
- EP-A1- 2 604 453
- EP-A2- 0 607 885
- EP-A2- 2 527 231
- WO-A1-88/04239
- WO-A1-2011/035860
- WO-A1-2013/060514
- WO-A1-2014/029541
- DE-A1- 19 713 043
- DE-A1-102012 219 002
- GB-A- 511 715
- GB-A- 1 444 768
- JP-A- 2002 137 603
- US-A- 3 073 620
- US-A- 3 139 275

## Beschreibung

Die vorliegende Erfindung betrifft eine Anordnung aus einem Rahmenelement eines Kraftfahrzeuges, einem Verbindungselement und einem an dem Verbindungselement befestigten Bauteil. Insbesondere betrifft die Erfindung auch ein Fahrwerk eines Kraftfahrzeuges, welches eine solche Anordnung aufweist.

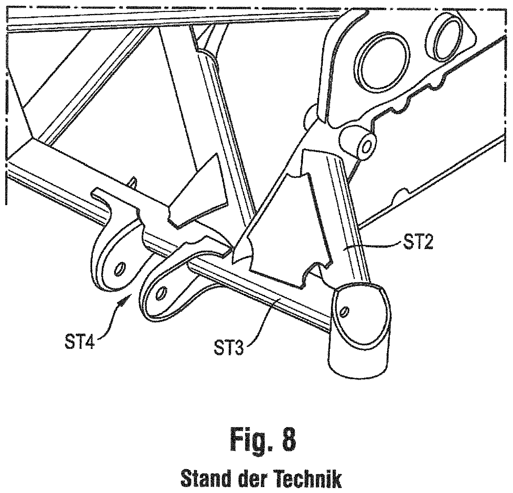

In der Automobilindustrie bzw. bei der Herstellung von Kraftfahrzeugen werden verschiedene Abschnitte des Kraftfahrzeuges durch Rahmenkonstruktionen aufgebaut. Ein Beispiel für eine solche Rahmenkonstruktion ist das in Fig. 8 gezeigte Fahrwerk eines Kraftfahrzeuges. Die entsprechende Rahmenkonstruktion wird durch verschiedene Rahmenelemente ST2, ST3, die miteinander verbunden sind, aufgebaut. Zur Anbindung beispielsweise der Radaufhängungen sind an der Rahmenkonstruktion an bestimmten Stellen Verbindungselemente ST4 vorgesehen, an denen entsprechende Lenker der Radaufhängung und/oder Streben befestigt werden können. Zur Befestigung der Lenker bzw. Streben werden oftmals Gummilager eingesetzt, damit bis zu einem gewissen Grad Druck- bzw. Zugbelastungen absorbiert werden können.

Der Einsatz solcher Gummilager erhöht zum einen das Gewicht und führt zum anderen zu einer Erhöhung der das Fahrwerk aufbauenden Teile.

Eine Anordnung mit den Merkmalen des Oberbegriffs des Anspruchs 1 ist aus der US 3,139,275 A bekannt.

Weiterer Stand der Technik ist in den Dokumenten EP 0 607 885 A2, GB 511 715 A, GB 1 444 768 A, US 3,073,620 A, EP 2 604 453 A1, EP 0 013 234 A1, WO 88/04239 A1 und JP 2002 137603 A offenbart.

Vor diesem Hintergrund ist es Aufgabe der vorliegenden Erfindung, eine Anordnung zu schaffen, die zu einer Gewichtsreduktion und Vereinfachung der Anordnung führt.

Diese Aufgabe wird durch eine jeweilige Anordnung gemäß Anspruch 1 gelöst.

Weitere bevorzugte Ausführungsformen der erfindungsgemäßen Anordnung sind Gegenstand der Unteransprüche.

Gemäß der Erfindung umfasst die Anordnung ein Rahmenelement eines Kraftfahrzeuges und ein Verbindungselement, das an dem Rahmenelement befestigt ist. An dem Verbindungselement ist wiederum ein Bauteil befestigt.

Eine zwischen dem Rahmenelement und dem Verbindungselement vorhandene stoffschlüssige Verbindung und/oder das Verbindungselement der erfindungsgemäßen Anordnung sind so ausgebildet, dass die stoffschlüssige Verbindung und/oder das Verbindungselement einen Elastizitätsmodul aufweist/aufweisen, der kleiner ist als ein Elastizitätsmodul des Bauteils.

Durch diese Ausgestaltung der stoffschlüssigen Verbindung und/oder des Verbindungselementes weisen diese eine dahingehende elastische Eigenschaft auf, dass sie die Funktion eines Elastomerlagers, beispielsweise eines Gummilagers, übernehmen. Anders ausgedrückt sind die stoffschlüssige Verbindung und/oder das Verbindungselement so ausgebildet, dass sie elastischer sind als das an dem Verbindungselement befestigte Bauteil und es insoweit bei Einleitung einer bestimmungsgemäßen Kraft in das Rahmenelement über das Bauteil und das Verbindungselement zu einer stärkeren elastischen Verformung der stoffschlüssigen Verbindung und/oder des Verbindungselementes kommt als des Bauteils.

Durch diese erfindungsgemäße Ausgestaltung der Anordnung ist es nicht notwendig, ein separates Elastomerlager vorzusehen, weshalb es zu einer Gewichtsreduzierung, Vereinfachung der gesamten Anordnung, und einer Verminderung der Teilezahl kommt.

Das Rahmenelement des Kraftfahrzeuges kann aus Metall oder einem faserverstärkten Kunststoff ausgebildet sein, wobei das Rahmenelement einen rohrförmigen oder auch anders ausgebildete Querschnitt aufweisen kann.

Bei denen das Rahmenelement verstärkenden Fasern kann es sich um Kurz- (0,1 bis 1mm), Lang- (1 bis 50mm) oder Endlosfasern (>50mm) handeln.

Die stoffschlüssige Verbindung kann beispielsweise durch einen Klebstoff hergestellt werden. In Abhängigkeit von der bestimmungsgemäßen Belastung der erfindungsgemäßen Anordnung bzw. der Größe der bestimmungsgemäß wirkenden Kräfte können verschiedenartige Klebstoffe zum Einsatz kommen. Beispiele hierfür sind höchstmodulige Klebstoffe mit einem Elastizitätsmodul >800 MPa, hochmodulige Klebstoffe mit einem Elastizitätsmodul von 100 bis 800 MPa und auch niedermodulige elastische Klebstoffe mit einem Elastizitätsmodul von <100 MPa.

Außerdem kann es sich bei dem Klebstoff um kalt- oder warmhärtende handeln.

Das Verbindungselement kann ebenfalls in Abhängigkeit von der bestimmungsgemäßen Belastung im Hinblick auf Geometrie und Material unterschiedlich ausgestaltet werden. Materialmäßig kann das Verbindungselement beispielsweise aus einem Metall, einem faserverstärkten Kunststoff (Faserlängen wie bezüglich des Rahmenelementes erläutert), einem steifen Klebstoff und auch aus einem Elastomer ausgebildet sein.

Durch Kombination der im Vorhergehenden erläuterten Ausgestaltung der stoffschlüssigen Verbindung und des Verbindungselementes kann eine notwendige Elastizität für die bestimmungsgemäße Belastung und den bestimmungsgemäßen Einsatz der Anordnung erzielt werden.

Bevorzugte Ausgestaltungen sind:
- Verbindungselement aus Elastomer mit bestimmten Elastizitätsmodul (zur Übernahme der elastischen Funktion) mit/ohne im Folgenden noch erläuterter Ummantelung, wobei die Befestigung des Verbindungselementes an dem Rahmenelement beliebig ist;
- die Kombination von Verbindungselement aus Metall/faserverstärktem Kunststoff und stoffschlüssige Verbindung mit einem bestimmten Elastizitätsmodul (zur Übernahme der elastischen Funktion); und
- Verbindungselement aus Elastomer mit einem bestimmten Elastizitätsmodul (zur Übernahme der elastischen Funktion), der selbst als Klebstoff fungiert und über den das Verbindungselement an dem Rahmenelement befestigt ist, mit/ohne Ummantelung.

Das Verbindungselement kann in Abhängigkeit von dem bestimmungsgemäßen Einsatz der Anordnung unterschiedlich ausgestaltet sein. Handelt es sich bei dem Verbindungselement zum Beispiel um ein für die Befestigung eines Lenkers einer Radaufhängung vorgesehenes Verbindungselement, kann dieses ein oder zwei Anbindungsabschnitte aufweisen, an denen der Lenker der Radaufhängung über eine Schraubverbindung befestigt werden kann. Die Anbindungsabschnitte können einzelne Teile oder zusammen auf einem Anlageabschnitt, der mit dem Rahmenelement in Anlage gebracht wird, vorgesehen sein. Sollten die Anbindungsabschnitte jeweils einzelne Teile sein, können diese ebenfalls einen sich seitlich erstreckenden Anlageabschnitt aufweisen.

Darüber hinaus kann das Verbindungselement auch so ausgestaltet sein, dass die Anbindungsabschnitte einen Gegenhalter aufweisen, mit dem sie zusammen das Rahmenelement umschließen.

Die stoffschlüssige Verbindung wird über den Klebstoff zwischen dem Verbindungselement und dem Rahmenelement hergestellt.

Gemäß der Erfindung sind die stoffschlüssige Verbindung und/oder das Verbindungselement geometrisch derart ausgebildet, dass die stoffschlüssige Verbindung und/oder das Verbindungselement eine Kraftverlängerungskennlinie eines Elastomerlagers aufweisen. Bei der Kraftverlängerungskennlinie handelt es sich insbesondere um eine übliche Kraft-Weg-Kennlinie.

Hierdurch kann das Verhalten eines Elastomerlagers, wie zum Beispiel eines Gummilagers, gut in die Anordnung integriert werden.

Erfindungsgemäß kann das Verbindungselement aus einem Elastomer ausgebildet sein. In diesem Fall kann das Verbindungselement mittelbar an dem Rahmenelement über die stoffschlüssige Verbindung bzw. einen Klebstoff befestigt werden. Fungiert der Elastomer selbst als Klebstoff, kann das Verbindungselement überaus gut direkt/unmittelbar an dem Rahmenelement befestigt werden.

In einer bevorzugten Ausgestaltung der erfindungsgemäßen Anordnung ist die stoffschlüssige Verbindung aus einem niedermoduligen Klebstoff gebildet, der insbesondere einen Elastizitätsmodul aufweist, der kleiner ist als 100 MPa.

Ein solcher Klebstoff ist insbesondere für den Einsatz im Fahrwerksbereich geeignet, da mit ihm die Eigenschaften eines Elastomerlagers gut nachgebildet werden können.

Gemäß einer weiteren bevorzugten Ausgestaltung der erfindungsgemäßen Anordnung ist das Verbindungselement aus einem Elastomer gebildet und von einer Ummantelung umgeben, die einen Elastizitätsmodul aufweist, der größer ist als der Elastizitätsmodul des Elastomers. Die Ummantelung ist bevorzugt aus einer Ober- und Unterschale gebildet.

Durch diese erfindungsgemäße Ausgestaltung kann erreicht werden, dass sich das Verbindungselement in Abhängigkeit von Zug- und Druckbeanspruchungen unterschiedlich verhält. Insbesondere wird bei Zugbeanspruchung die Verbindung zwischen dem Rahmenelement und dem Verbindungselement derart unterstützt, dass das Risiko eines Abreißens der Verbindung vermindert wird.

Gemäß einer weiteren bevorzugten Anordnung der Erfindung wird die stoffschlüssige Verbindung aus einem Klebstoff und das Verbindungselement aus einem Metall gebildet, wobei eine sich zwischen dem Rahmenelement und dem Verbindungselement befindende aus dem Klebstoff gebildete Klebstoffschicht eine Dicke von bis zu 10 mm, insbesondere zwischen 1mm und 10mm, aufweist.

Durch die Ausgestaltung des Verbindungselementes aus Metall kann eine gute Befestigung des Bauteiles an dem Verbindungselement sichergestellt werden. Die Klebstoffschicht, die eine Dicke von bis zu 10 mm aufweist, übernimmt in dieser bevorzugten Ausgestaltung der erfindungsgemäßen Anordnung die Funktion des Elastomerlagers.

In einer weiteren bevorzugten Ausgestaltung der erfindungsgemäßen Anordnung ist das Verbindungselement aus einem Elastomer gebildet und weist eine Durchgangsöffnung auf, an der das Bauteil über eine Schraubverbindung befestigt werden kann, wobei ein Verstärkungsring in die Durchgangsöffnung eingesetzt ist. Während das Verbindungselement aus dem Elastomer die Funktion des Elastomerlagers übernimmt, kann über den Verstärkungsring eine gute Befestigung des Bauteils an dem Verbindungselement erreicht werden.

In einer weiteren bevorzugten Ausgestaltung der erfindungsgemäßen Anordnung ist das Verbindungselement an dem Rahmenelement zusätzlich zu der stoffschlüssigen Verbindung durch eine Faserwickelung befestigt.

Die Faserwickelung kann beispielsweise durch eine Kohlenstofffaser, Glasfaser, Aramidfaser oder Naturfaser ausgebildet sein. Die Faserwickelung kann darüber hinaus durch eine einzelne Faser oder auch durch eine Vielzahl von Fasern ausgebildet sein.

Darüber hinaus kann die Faserwickelung in eine Kunststoffmatrix aus einem Duroplast oder Thermoplast eingebettet sein.

Die Faserwickelung kann darüber hinaus so ausgebildet sein, dass die die Faserwickelung ausbildende Faser derart um das Rahmenelement und das Verbindungselement gewickelt ist, dass Faserabschnitte auf der Oberfläche des Rahmenelementes bzw. des Verbindungselementes parallel zueinander verlaufen oder auch sich überkreuzen.

Allgemein kann die Faserwickelung derart hergestellt sein, dass die die Faserwickelung ausbildende Faser senkrecht zu einer Längsrichtung des Rahmenelementes verläuft. Ist die Faserwickelung aus mehreren einzelnen Fasern aufgebaut, ist es auch möglich, dass die einzelnen Fasern sich kreuzen. D.h. die Faser(n) können geodätische Linien bilden, die Punkte verbinden, die bezüglich der Längsrichtung auf gleicher Höhe liegen oder versetzt zueinander sind.

Die Oberfläche, auf der die Faserwickelung verläuft, kann zur Sicherung und Positionierung der Faserwickelung konkave Abschnitte, beispielsweise Rillen, aufweisen.

In dem Fall, dass das Verbindungselement von der im Vorhergehenden erläuterten Ummantelung umfasst ist, wird durch diese Ummantelung sichergestellt, dass aufgrund der elastischen Bewegung des Verbindungselementes bzw. der stoffschlüssigen Verbindung nicht das Risiko besteht, dass die Faserwickelung sich löst.

In einer weiteren bevorzugten Ausgestaltung der erfindungsgemäßen Anordnung ist die stoffschlüssige Verbindung aus einem Klebstoff gebildet und erstreckt sich das Rahmenelement in einer Längsrichtung. Eine sich zwischen dem Rahmenelement und dem Verbindungselement befindende aus dem Klebstoff gebildete Klebstoffschicht ist bevorzugt derart ausgebildet, dass eine Menge des Klebstoffes an in der Längsrichtung liegenden Endabschnitten des Verbindungselementes zunimmt.

Beispielsweise ist das Verbindungselement so ausgestaltet, dass ein Spalt zwischen dem Rahmenelement und dem Verbindungselement, in dem sich der Klebstoff befindet, an den in der Längsrichtung liegenden Endabschnitten des Verbindungselementes größer wird. Dies kann dadurch bewerkstelligt werden, dass das Verbindungselement auf der Anlageoberfläche, mit dem es an dem Rahmenelement anliegt, eine zulaufende und/oder auch abgestufte - bevorzugt mehrfach abgestufte - Endabschnitte aufweist.

Weiterhin kann beispielsweise ein Überschuss des Klebstoffes derart aufgetragen werden, dass an den Endabschnitten eine Wulst entsteht.

Die Erfindung betrifft ebenfalls ein Fahrwerk eines Kraftfahrzeuges, wobei das Fahrwerk eine Anordnung gemäß vorhergehender Erläuterung aufweist.

Im Folgenden wird eine bevorzugte Ausführungsform und entsprechende Varianten der erfindungsgemäßen Anordnung unter Bezug auf die beigefügten Figuren erläutert.

Alle im Vorhergehenden gemachten Erläuterungen, insbesondere im Hinblick auf den Elastizitätsmodul, Materialien des Rahmenelementes und Verbindungselementes, und die Faserwickelung gelten für die folgenden Ausführungsformen entsprechend.
**Fig. 1** zeigt eine erfindungsgemäße Anordnung aus einem Rahmenelement, an dem ein Lenker über ein Verbindungselement befestigt ist;
**Fig. 2** zeigt zwei unterschiedliche Varianten der erfindungsgemäßen Anordnung, wobei der an dem Verbindungselement befestigte Lenker in beiden dargestellten Varianten unterschiedlich aufgebaut ist;
**Fig. 3A bis 3F** zeigen unterschiedliche Varianten des Verbindungselementes der erfindungsgemäßen Anordnung;
**Fig. 4** zeigt die erfindungsgemäße Anordnung, wobei das Verbindungselement aus einem Elastomer gebildet ist;
**Fig. 5** zeigt die erfindungsgemäße Anordnung, wobei das Verbindungselement aus einem Elastomer gebildet ist und das Rahmenelement sowie das Verbindungselement von einer Ummantelung umgeben ist;
**Fig. 6** zeigt die erfindungsgemäße Anordnung, wobei das Verbindungselement aus einem Metall ausgebildet ist und eine dicke Klebstoffschicht zwischen dem Rahmenelement und dem Verbindungselement zur Übernahme der Funktion eines Elastomerlagers ausgebildet ist;
**Fig. 7** zeigt vergrößerte Darstellungen einer sich zwischen dem Verbindungselement und dem Rahmenelement befindenden Klebstoffschicht; und
**Fig. 8** zeigt eine Rahmenkonstruktion bzw. ein Fahrwerk eines Kraftfahrzeuges gemäß dem Stand der Technik.

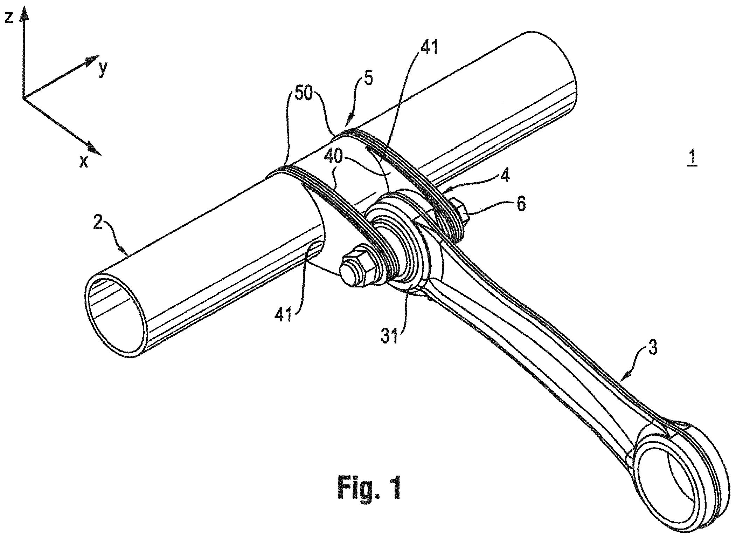

In Fig. 1 ist eine erfindungsgemäße Anordnung 1 gezeigt. Die Anordnung 1 umfasst ein Rahmenelement 2, an dem ein Bauteil 3, beispielsweise ein Lenker, über ein Verbindungselement 4 befestigt ist.

Das Rahmenelement 2 ist in dieser Ausführungsform aus einem faserverstärkten Kunststoff ausgebildet und weist einen rohrförmigen Querschnitt auf. Das Rahmenelement 2 kann allerdings auch aus einem Metall ausgebildet sein und kann darüber hinaus auch andersartige Querschnitte aufweisen.

Das Bauelement 3 ist in der dargestellten Anordnung ein Lenker, der beispielsweise zu einer Radaufhängung gehört. Der Lenker 3 ist mittelbar über das Verbindungselement 4 an dem Rahmenelement 2 befestigt. Die direkte Befestigung des Lenkers 3 an dem Verbindungselement 4 erfolgt über die dargestellte Schraubverbindung 6. Für diese Schraubverbindung 6 umfasst das Verbindungselement 4 zwei Anbindungsabschnitte 40, die jeweils eine Durchgangsöffnung aufweisen, durch die die Schraubverbindung 6 verläuft. Wie aus Fig. 1 ersichtlich ist, durchläuft die Schraubverbindung 6 einen dem Rahmenelement 2 zugewandten Ring 31 des Lenkers 3 derart, dass der Lenker 3 an dem Verbindungselement befestigt ist und die Befestigung bzw. das Lager des Lenkers 3 einen Freiheitsgrad (Rotation) aufweist.

Über den dargestellten Lenker 3 werden während des Betriebes des entsprechenden Fahrzeuges Kräfte in das Rahmenelement 2 eingeleitet. Damit es zu keiner übermäßigen Abnutzung des Verbindungselementes 4 bzw. des Lenkers 3 kommt, ist es vorteilhaft, den Lenker 3 an dem Verbindungselement 4 elastisch zu lagern. Vorrangig ist diese elastische Lagerung jedoch zur Aufrechterhaltung eines gewissen Fahrkomforts sowie zur Vermeidung einer übermäßigen Geräuschentwicklung während des Fahrbetriebs vorgesehen. Wie im Folgenden noch genauer dargestellt werden wird, ist diese elastische Lagerung in der in Fig. 1 gezeigten Anordnung 1 nicht über ein Elastomerlager bzw. Gummilager verwirklicht, sondern durch die materialmäßige Ausgestaltung des Verbindungselementes 4 und/oder einer zwischen dem Rahmenelement 2 und dem Verbindungselement 4 vorgesehenen stoffschlüssigen Verbindung.

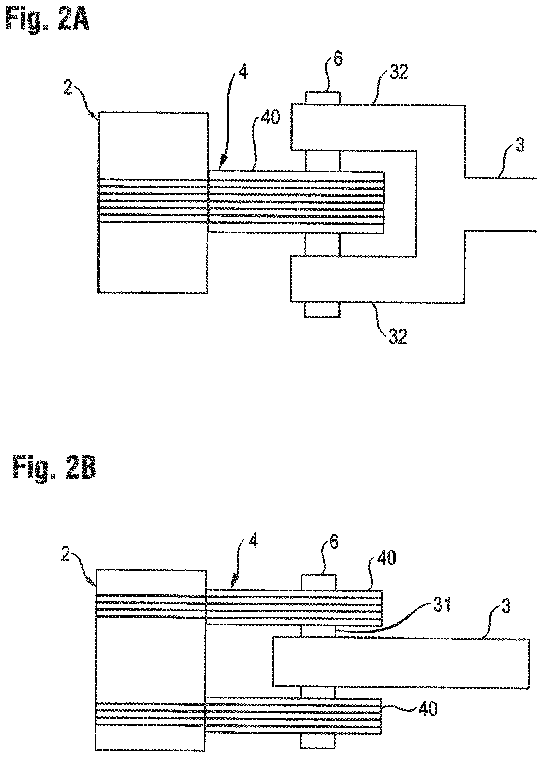

Fig. 2A und 2B zeigen alternative Befestigungsmöglichkeiten des Lenkers 3 an dem Verbindungselement 4. Während in Fig. 1 und 2B das Verbindungselement 4 aus zwei voneinander unabhängigen Anbindungsabschnitten 40, zwischen denen sich der dem Rahmenelement 2 zugewandte Ring 31 des Lenkers 3 befindet, durch den die Schraubverbindung 6 verläuft, gebildet ist, besteht, wie in Fig. 2A gezeigt, die Möglichkeit, den Lenker 3 derart auszugestalten, dass er zwei voneinander beabstandete Schenkel 32 aufweist, zwischen denen sich der Anbindungsabschnitt 40 des Verbindungselementes 4 befindet. In den Schenkeln 32 des Lenkers 3 befinden sich Durchgangsöffnungen für die Schraubverbindung 6. Die Schraubverbindung 6 durchläuft die in den Schenkeln 32 gebildeten Durchgangsöffnungen sowie eine in dem Anbindungsabschnitt 40 vorhandene Durchgangsöffnung, wodurch der Lenker 3 an dem Anbindungsabschnitt 40 befestigt ist und die Befestigung/Lagerung einen Freiheitsgrad (Rotation) aufweist.

Zurückkehrend zu Fig. 1 umfasst die Anordnung 1 weiterhin das Verbindungselement 4, über das der Lenker 3 mittelbar an dem Rahmenelement 2 befestigt ist. Wie bereits erwähnt, umfasst das Verbindungselement 4 in der in Fig. 1 gezeigten Variante zwei Anbindungsabschnitte 40, die jeweils mit einer dem Rahmenelement zugewandten Anlageoberfläche 41 an dem Rahmenelement 2 anliegen. Die Anbindungsabschnitte 40 haben einen in der in Fig. 1 gezeigten X-Z-Ebene liegenden derartigen Verlauf, dass die Anbindungsabschnitte 40 mit ihren Anlageoberflächen 41 an dem Rahmenelement 2 flächig anliegen.

Zwischen den Anlageoberflächen 41 und dem Rahmenelement 2 befindet sich bevorzugt eine Klebstoffschicht, die eine stoffschlüssige Verbindung zwischen den Anbindungsabschnitten 40 und dem Rahmenelement bildet. Wie im Nachstehenden noch erläutert werden wird, kann die Klebstoffschicht die Funktion eines Elastomerlagers übernehmen.

Zusätzlich zu der stoffschlüssigen Verbindung kann das Verbindungselement 4 noch über eine Faserwickelung 5 an dem Rahmenelement 2 befestigt sein. In der in Fig. 1 gezeigten Variante des Verbindungselementes 4 ist jeder der Anbindungsabschnitte 40 durch eine Wickelung 50 zusätzlich zu der stoffschlüssigen Verbindung an dem Rahmenelement 2 befestigt. Die Wickelungen 50 werden dadurch hergestellt, dass eine Faser um das Rahmenelement und den entsprechenden Anbindungsabschnitt 40 gewickelt wird. Die der Wickelung 50 entsprechende Faser kann entweder in eine Kunststoffmatrix (Thermoplast oder Duroplast) getränkt oder unbehandelt um das Rahmenelement 2 und den entsprechenden Anbindungsabschnitt 40 gewickelt werden. Wenn die Faser unbehandelt um das Rahmenelement 2 und den entsprechenden Anbindungsabschnitt 40 gewickelt wird, kann anschließend die Kunststoffmatrix aufgebracht werden.

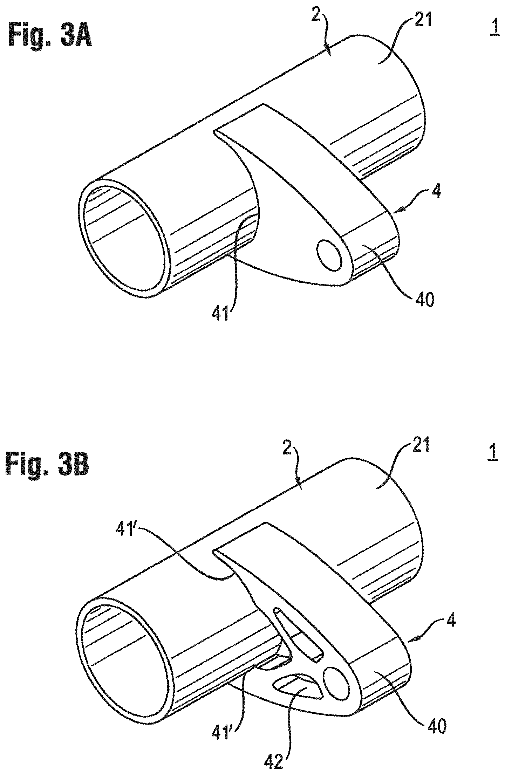

Im Folgenden werden unter Bezug auf Fig. 3A bis F verschiedene Varianten des Verbindungselementes 4 erläutert.

Das in Fig. 3A gezeigte Verbindungselement entspricht dem in Fig. 2A gezeigten. Das heißt, dass das Verbindungselement 4 einen einzigen Anbindungsabschnitt 40 aufweist, der bestimmungsgemäß zwischen den in Fig. 2A gezeigten Schenkeln 32 angeordnet wird.

Die dem Rahmenelement 2 zugewandte Anlageoberfläche 41 des Anbindungsabschnittes 40 liegt flächig an der kreisförmigen Außenoberfläche 21 des Rahmenelementes 2 an. Verglichen mit den in Fig. 1 gezeigten Anbindungsabschnitten 40 ist der in Fig. 3A gezeigte Anbindungsabschnitt 40 in der Längsrichtung (Y-Richtung) dicker ausgebildet.

Die Faserwickelung ist in Fig. 3A nicht vorhanden, kann allerdings auch vorgesehen werden.

Das in Fig. 3B gezeigte Verbindungselement 4 entspricht dem in Fig. 3A gezeigten, wobei zusätzlich Ausnehmungen bzw. Durchgänge 42 in dem Anbindungsabschnitt 40 ausgebildet sind. Die Durchgänge 42 sind zur Gewichtsreduktion vorgesehen und befinden sich in Abhängigkeit von der bestimmungsgemäßen Kraftflussrichtung (X-Richtung) an weniger belasteten Abschnitten des Verbindungselementes 40. Insoweit handelt es sich bei den Durchgängen 42 bzw. Ausnehmungen um Maßnahmen der Gewichtsoptimierung.

Das in Fig. 3B gezeigte Verbindungselement 4 liegt mit zwei Anlageoberflächen 41' an dem Rahmenelement 2 an. Die dem Rahmenelement 2 zugewandten Anlageoberflächen 41' sind deshalb voneinander getrennt, weil sich einer der Durchgänge 42 auf der dem Rahmenelement 2 zugewandten Seite befindet.

In der in Fig. 3B gezeigten Variante ist die Faserwickelung 5 ebenfalls weggelassen, kann allerdings je nach Bedarf vorgesehen sein.

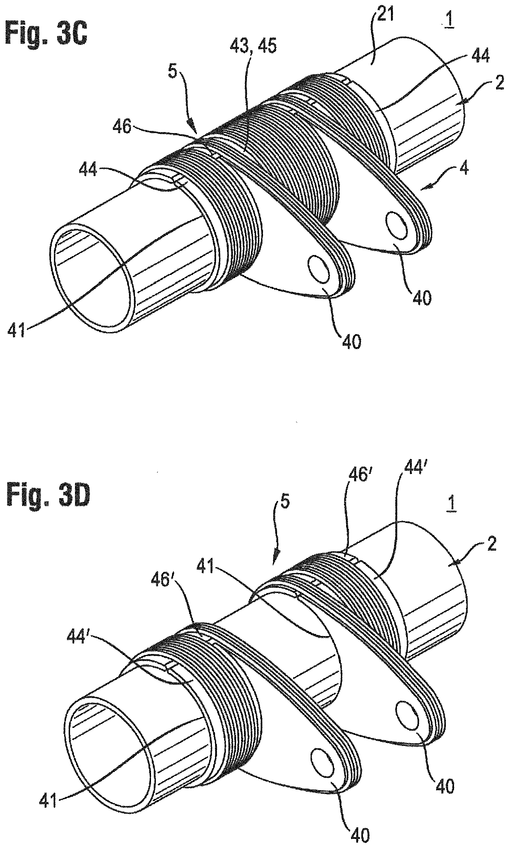

In Fig. 3C ist eine weitere Variante des Verbindungselementes 4 gezeigt. In dieser Variante sind die Anbindungsabschnitte 40 auf einem sich in der Längsrichtung (Y-Richtung) erstreckenden Anlageabschnitt 43 ausgebildet. Der Anlageabschnitt 43 ist an die Außenoberfläche 21 des Rahmenelementes 2 angepasst und liegt an diesem flächig an. Die Anbindungsabschnitte 40 sind so auf dem Anlageabschnitt 43 ausgebildet, dass äußere sich in der Längsrichtung erstreckende Außenabschnitte 44 des Auflageabschnittes 43 auf den voneinander abgewandten Seiten der Anbindungsabschnitte 40 ausgebildet sind. Zwischen den Anbindungsabschnitten 40 befindet sich ein Verbindungsabschnitt 45 des Anlageabschnittes 43.

Der Anlageabschnitt 43 wird durch ein Gegenelement 46 derart ergänzt, dass der Anlageabschnitt 43 und das Gegenelement 46 bis auf einen zwischen ihnen gebildeten Spalt das Rahmenelement 2 vollständig umlaufen.

Die Faserwickelung 5 umfasst in der in Fig. 3C gezeigten Variante fünf Wickelungen, wobei jeweils eine Wickelung über die Außenabschnitte 44, eine Faserwickelung über den Verbindungsabschnitt 45 und jeweils eine Wickelung über die Anbindungsabschnitte 40 verläuft.

In Fig. 3D ist eine weitere Variante der erfindungsgemäßen Anordnung gezeigt, wobei sich das Verbindungselement 4 von dem aus Fig. 3C dadurch unterscheidet, dass die Anbindungsabschnitte 40 und entsprechende Außenabschnitte 44' nicht über einen Verbindungsabschnitt 45 verbunden sind. Das heißt die Anbindungsabschnitte 40 sind wie bei der Variante des Verbindungselementes 4 aus Fig. 1 nicht miteinander verbunden. Jeder der Außenabschnitte 44', die sich auf voneinander abgewandten Seiten der Anbindungsabschnitte 40 in der Längsrichtung erstrecken, umfassen ein Gegenelement 46', die sich mit den entsprechenden Außenabschnitten 44' derart ergänzen, dass sie zusammen das Rahmenelement 2 umlaufen.

Die Faserwickelung 5 umfasst in der in Fig. 3D gezeigten Variante vier Wickelungen, wobei jeweils eine Wickelung um die Außenabschnitte 44' und die entsprechenden Gegenelemente 46' sowie jeweils eine Wickelung um die Anbindungsabschnitte 40 und das entsprechende Gegenelement 46' verläuft.

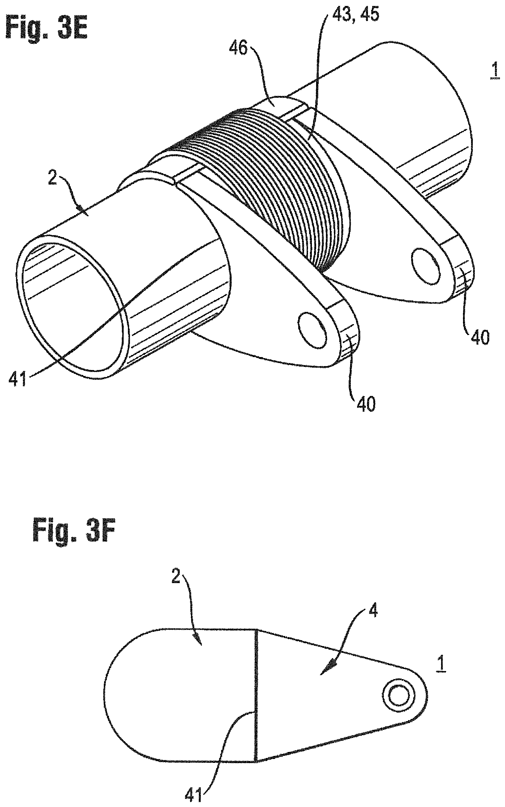

In Fig. 3E ist eine weitere Variante der erfindungsgemäßen Anordnung gezeigt, wobei sich diese von der in Fig. 3C dargestellten dadurch unterscheidet, dass das Verbindungselement 4 keine Außenabschnitte 44 umfasst und nur eine einzige Wickelung zwischen den Anbindungsabschnitten 40 vorhanden ist.

Wie aus der vorhergehenden Erläuterung zu Fig. 3A bis 3E ersichtlich wird, ist die dem Rahmenelement 2 zugewandte Anlageoberflächen 41 des Verbindungselementes 4 in der X-Z-Ebene so ausgebildet, dass sie an den kreisförmigen Querschnitt des Rahmenelementes 2 angepasst sind.

Für alle im Vorhergehenden erläuterten Varianten können der Querschnitt des Rahmenelementes 2 und die Anlageoberfläche 41 des Verbindungselementes 4 allerdings auch so ausgestaltet sein, dass zwischen dem Rahmenelement 2 und dem Verbindungselement 4 im zusammengesetzten Zustand ein Formschluss entsteht. Dies ist in Fig. 3F gezeigt.

Die in Fig. 3F gezeigte Ansicht entspricht der X-Z-Ebene, woraus hervorgeht, dass das Rahmenelement 2 im Querschnitt einen kreisbogenförmigen Abschnitt und einen linienförmigen Abschnitt aufweist. Das heißt das Rahmenelement 2 umfasst eine kreisbogenförmige Oberfläche sowie eine ebene Oberfläche, an der das Verbindungselement 4 mit seiner Anlageoberfläche 41 anliegt. Durch den hierdurch entstehenden Formschluss wird vorteilhafterweise erreicht, dass es zu keinem Verdrehen des Verbindungselementes 4 bezüglich des Rahmenelementes 2 bei Einleiten einer hohen Kraft kommt.

Der Lenker 3 bzw. das Bauteil kann an alle im Vorhergehenden erläuterten Verbindungselemente 4 über eine Schraubverbindung angebracht werden.

Bei allen Anordnungen ist an der Schraubverbindung 6 kein Elastomerlager vorgesehen, denn die entsprechende Funktion ist durch die materialmäßige und geometrische Ausgestaltung des Verbindungselementes 4 und/oder der stoffschlüssigen Verbindung zwischen dem Rahmenelement 2 und dem Verbindungselement 4 verwirklicht.

Insbesondere alle vor der Figurenbeschreibung gemachten Erläuterungen, insbesondere im Hinblick auf den Elastizitätsmodul, Materialien des Rahmenelementes und Verbindungselementes, und die Faserwickelung gelten für die im Vorhergehenden erläuterten Varianten der erfindungsgemäßen Anordnung 1 entsprechend.

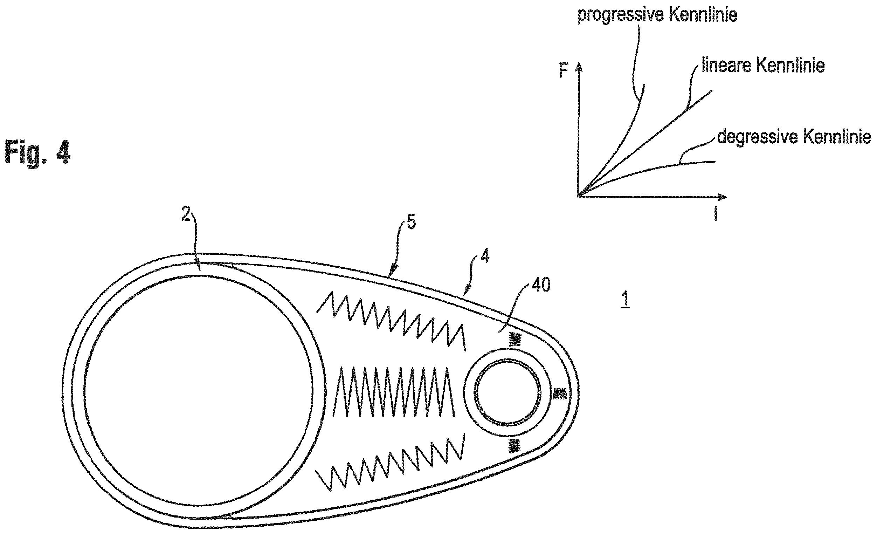

In der in Fig. 4 gezeigten Anordnung 1 ist das Verbindungselement 4 aus einem Elastomer oder einem sehr steifen Klebstoff (der selbst ein Elastomer sein kann) ausgebildet, die jeweils einen Elastizitätsmodul aufweisen, der kleiner ist als der Elastizitätsmodul des Materials des Lenkers 3. In der in Fig. 4 gezeigten Variante übernimmt das Verbindungselement 4, das aus dem Elastomer oder sehr steifen Klebstoff gebildet ist, die Funktion des Elastomerlagers. Das Verbindungselement 4 bzw. die Anbindungsabschnitte 40 sind an dem Rahmenelement 2 über eine stoffschlüssige Verbindung, beispielsweise eine Klebstoffschicht, befestigt. Wenn der Elastomer des Verbindungselementes selbst die Funktion des Klebstoffes übernimmt, kann das Verbindungselement unmittelbar an dem Rahmenelement befestigt werden. In Fig. 4 sind schematisch Federelemente gezeigt, die das elastische Verhalten des Verbindungselementes 4 schematisch andeuten. Das Verbindungselement 4 kann in Abhängigkeit von der über das Bauelement 3 bzw. den Lenker 3 einzuleitenden Kraft geometrisch so ausgebildet sein, dass es eine in Fig. 4 ebenfalls dargestellte Kraft-Verlängerungs-Kennlinien aufweist. Das heißt, dass aufgrund der Geometrie des Verbindungselementes und der materialmäßigen Ausgestaltung das Verbindungselement eine degressive, lineare oder progressive Kraft-Verlängerungs-Kennlinie aufweisen kann.

Zur besseren Lagerung der Schraubverbindung 6 kann noch ein Ring in die entsprechende Durchgangsöffnung des Verbindungselementes 4 eingesetzt sein. Dieser kann aus Metall oder einem Kunststoff gebildet sein.

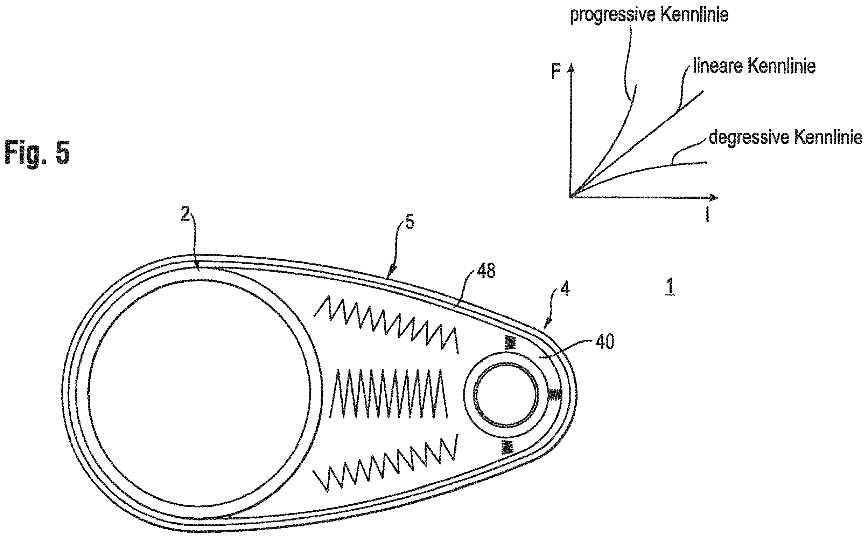

In Fig. 5 ist eine Variante der erfindungsgemäßen Anordnung 1 gezeigt, wobei die materialmäßige und geometrische Ausgestaltung des Verbindungselementes 4, des Rahmenelementes 2 und der Faserwickelung 5 mit der aus Fig. 4 identisch ist. Die in Fig. 5 gezeigte Variante unterscheidet sich von der in Fig. 4 gezeigten dadurch, dass das Verbindungselement 4 von einer Ummantelung 48 umgeben ist, die zumindest die Außenoberfläche des Rahmenelementes 2 und des Verbindungselementes 4, über die die Faserwickelung 5 verläuft, umgibt bzw. ummantelt.

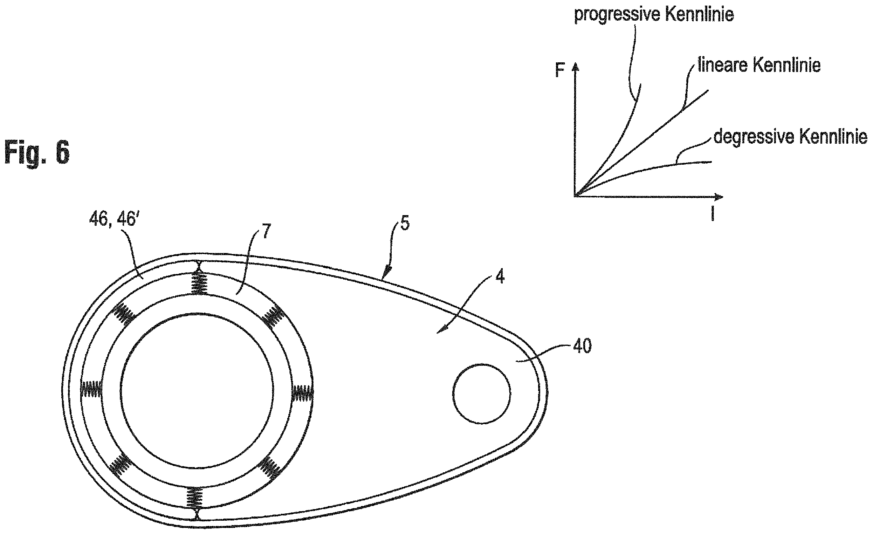

In Fig. 6 ist eine weitere Variante der erfindungsgemäßen Ausführungsform gezeigt. In dieser Variante ist das Verbindungselement 4 aus einem Metall gebildet und weist auch das in Fig. 3C bis 3E gezeigte Gegenelement 46, 46' auf. Insoweit umläuft das Verbindungselement 4 vollständig das Rahmenelement 2.

Alternativ kann das Verbindungselement 4 ebenso aus einem faserverstärkten Kunststoff gebildet sein.

Zwischen dem Verbindungselement 4 und dem Rahmenelement 2 ist eine Klebstoffschicht ausgebildet, die die Funktion eines Elastomerlagers übernimmt. Im ausgehärteten Zustand des entsprechenden Klebstoffes 7 bzw. der Klebstoffschicht umfasst dieser einen Elastizitätsmodul, der geringer ist als der des befestigten Lenkers 3 bzw. Bauteils. Der Elastizitätsmodul der Klebstoffschicht hat einen Wert von ≤ 100 MPa und die Klebstoffschicht hat bevorzugt eine Dicke von bis zu 10 mm.

Das Verbindungselement 4 und die Klebstoffschicht kann geometrisch so ausgebildet werden, dass die Klebstoffschicht eine einem Elastomerlager entsprechende Kraft-Verlängerungs-Kennlinie aufweist. Hierbei kann es sich wiederum um eine degressive, lineare oder progressive Kennlinie handeln (siehe auch Fig. 6).

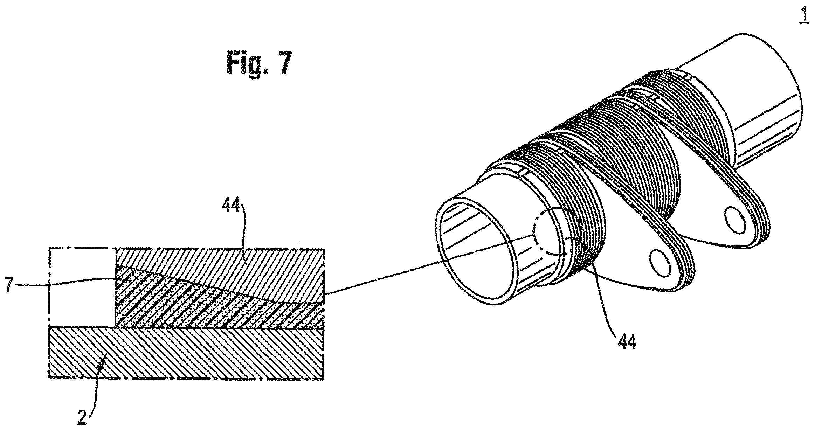

In Fig. 7 ist der Aufbau der Klebstoffschicht zwischen der Anlageoberfläche des Verbindungselementes und dem Rahmenelement 2 vergrößert dargestellt. Die ebenfalls dargestellte erfindungsgemäße Anordnung 1 entspricht der in Fig. 3C gezeigten, wobei die Ausgestaltung der Klebstoffschicht nicht auf diese Variante beschränkt, sondern auf alle Varianten übertragbar ist. Der Außenabschnitt 44 des Verbindungselementes 4 ist, wie in Fig. 7 gezeigt, an den in Längsrichtung liegenden Endabschnitten so ausgestaltet, dass die Klebstoffschicht bzw. die Menge des Klebstoffes 7 an den Endabschnitten zunimmt. Dies kann beispielsweise durch eine stufenweise oder kontinuierliche/lineare Abschrägung des Außenabschnittes 44 erfolgen.

Außerdem ist es möglich, einen Überschuss des Klebstoffes derart aufzubringen, dass eine Wulst an den Endabschnitten gebildet ist.

Durch diese Ausgestaltungen der Klebstoffschicht wird erreicht, dass Spitzenspannungen an den Endabschnitten vermindert sind.

## Patentansprüche

1. Anordnung (1), welche aufweist:
ein Rahmenelement (2) eines Kraftfahrzeuges;
ein Verbindungselement (4), das an dem Rahmenelement (2) befestigt ist; und
ein Bauteil (3), das an dem Verbindungselement (4) befestigt ist;
wobei
eine zwischen dem Verbindungselement (4) und dem Rahmenelement (2) vorgesehene stoffschlüssige Verbindung und/oder das Verbindungselement (4) derart ausgebildet sind, dass sie einen Elastizitätsmodul aufweisen, der kleiner ist als ein Elastizitätsmodul des Bauteils (3), **dadurch gekennzeichnet, dass**
die stoffschlüssige Verbindung aus einem niedermoduligen Klebstoff gebildet ist, und/oder
das Verbindungselement (4) aus einem Elastomer ausgebildet ist und das Verbindungselement (4) von einer Ummantelung (48) umgeben ist, die einen Elastizitätsmodul aufweist, der größer ist als der Elastizitätsmodul des Elastomers, und/oder
die stoffschlüssige Verbindung aus einem Klebstoff und das Verbindungselement (4) aus einem Metall gebildet sind und eine sich zwischen dem Rahmenelement (2) und dem Verbindungselement (4) befindende aus dem Klebstoff gebildete Klebstoffschicht eine Dicke von bis zu 10mm aufweist.

2. Anordnung (1) gemäß Anspruch 1, wobei die stoffschlüssige Verbindung und/oder das Verbindungselement (4) geometrisch derart ausgebildet sind, dass die stoffschlüssige Verbindung und/oder das Verbindungselement (4) eine KraftVerlängerungskennlinie eines Elastomerlagers aufweisen.

3. Anordnung (1) gemäß Anspruch 1 oder 2, wobei das Verbindungselement (4) aus einem Elastomer ausgebildet ist.

4. Anordnung (1) gemäß Anspruch 3, wobei
das Verbindungselement (4) eine Durchgangsöffnung aufweist, an der das Bauteil (3) über eine Schraubverbindung (6) befestigt ist, und
ein Verstärkungsring in die Durchgangsöffnung eingesetzt ist.

5. Anordnung (1) gemäß einem der vorhergehenden Ansprüche 1 bis 4, wobei
das Verbindungselement (4) an dem Rahmenelement (2) zusätzlich zu der stoffschlüssigen Verbindung durch eine Faserwickelung (5) befestigt ist.

6. Anordnung (1) gemäß einem der vorhergehenden Ansprüche 1 bis 5, wobei
die stoffschlüssige Verbindung aus einem Klebstoff gebildet ist,
das Rahmenelement (2) sich in einer Längsrichtung erstreckt, und
eine sich zwischen dem Rahmenelement (2) und dem Verbindungselement (4) befindende aus dem Klebstoff (7) gebildete Klebstoffschicht derart ausgebildet ist, dass eine Menge des Klebstoffes (7) an in der Längsrichtung liegenden Endabschnitten des Verbindungselementes (4) zunimmt.

7. Fahrwerk eines Kraftfahrzeuges aufweisend eine Anordnung (1) gemäß einem der vorhergehenden Ansprüche 1 bis 6.

## Claims

1. An assembly (1), having:
a frame element (2) of a motor vehicle;
a connecting element (4) which is fastened to the frame element (2); and
a component (3) which is fastened to the connecting element (4);
wherein
a material-formed bond provided between the connecting element (4) and the frame element (2) and/or the connecting element (4) is/are designed such that they have a modulus of elasticity which is less than a modulus of elasticity of the component (3), **characterised in that**
the material-formed bond is formed from a low-modulus adhesive, and/or
the connecting element (4) is formed from an elastomer and the connecting element (4) is surrounded by an envelope (48) which has a modulus of elasticity which is greater than the modulus of elasticity of the elastomer, and/or
the material-formed bond is formed from an adhesive and the connecting element (4) from a metal, and an adhesive layer formed from the adhesive and located between the frame element (2) and the connecting element (4) has a thickness of up to 10 mm.

2. An assembly (1) according to Claim 1, wherein
the material-formed bond and/or the connecting element (4) are formed geometrically such that the material-formed bond and/or the connecting element (4) have a force-extension characteristic of an elastomeric bearing.

3. An assembly (1) according to Claim 1 or 2, wherein
the connecting element (4) is formed from an elastomer.

4. An assembly (1) according to Claim 3, wherein
the connecting element (4) has a passage opening to which the component (3) is fastened by means of a screw connection (6), and
a reinforcing ring is inserted into the passage opening.

5. An assembly (1) according to one of the preceding Claims 1 to 4, wherein
the connecting element (4) is fastened to the frame element (2) by a fibre winding (5) in addition to the material-formed bond.

6. An assembly (1) according to one of the preceding Claims 1 to 5, wherein
the material-formed bond is formed from an adhesive,
the frame element (2) extends in a longitudinal direction, and
an adhesive layer formed from the adhesive (7) and located between the frame element (2) and the connecting element (4) is designed such that a quantity of the adhesive (7) increases at end portions of the connecting element (4) which lie in the longitudinal direction.

7. A chassis of a motor vehicle having an assembly (1) according to one of the preceding Claims 1 to 6.

## Revendications

1. Agencement (1) comprenant :
un élément de châssis (2) d'un véhicule,
un élément de liaison (4) fixé à l'élément de châssis (2),
un composant (3) fixé à l'élément de liaison (4),
dans lequel
une liaison par la matière prévue entre l'élément de liaison (4) et l'élément de châssis (2) et/ou l'élément de liaison (4) est(sont) réalisé(es) de sorte qu'ils présentent un module d'élasticité inférieur au module d'élasticité du composant (3),
**caractérisé en ce que**
la liaison par la matière est formée par une colle à faible module, et/ou l'élément de liaison (4) est réalisé en un élastomère et l'élément de liaison (4) est entouré par une enveloppe (48) qui présente un module d'élasticité supérieur au module d'élasticité de l'élastomère, et/ou la liaison par la matière est réalisée en une colle, l'élément de liaison (4) est réalisé en métal, et, la couche formée par la colle située entre l'élément de châssis (2) et l'élément de liaison (4) a une épaisseur allant jusqu'à 10 mm.

2. Agencement (1) conforme à la revendication 1,
dans lequel la liaison par la matière et/ou l'élément de liaison (4) a(ont) une configuration géométrique telle que la liaison par la matière et/ou l'élément de liaison (4) ai(en)t la courbe caractéristique allongement-force d'un palier en élastomère.

3. Agencement (1) conforme à la revendication 1 ou 2,
dans lequel l'élément de liaison (4) est réalisé en un élastomère.

4. Agencement (1) conforme à la revendication 3,
dans lequel l'élément de liaison (4) comporte une ouverture de passage sur laquelle le composant (3) est fixé par une liaison par vissage (6) et une bague de renfort est insérée dans l'ouverture de passage.

5. Agencement (1) conforme à l'une des revendications précédentes 1 à 4, dans lequel l'élément de liaison (4) est fixé, sur l'élément de châssis (2), en plus de la liaison par la matière par un enroulement de fibres (5).

6. Agencement (1) conforme à l'une des revendications précédentes 1 à 5, dans lequel :
la liaison par la matière est formée par une colle,
l'élément de châssis (2) s'étend en direction longitudinale et la couche formée par la colle (7) située entre l'élément de châssis (2) et l'élément de liaison (4) est réalisée de sorte que la quantité de colle (7) augmente sur les segments d'extrémité de l'élément de liaison (4) situés en direction longitudinale.

7. Mécanisme de roulement d'un véhicule comportant un agencement (1) conforme à l'une des revendications précédentes 1 à 6.
